# EUROPEAN PATENT SPECIFICATION

(11) **EP 1 135 291 B1**
(45) Date of publication and mention of the grant of the patent: **21.01.2004**
(21) Application number: 99972995.7
(22) Date of filing: 29.11.1999
(51) Int. Cl.: B64D 39/04

(54) **DEPLOYABLE PROBE ARRANGEMENT FOR AIRCRAFT**
EINZIEHBARE SONDENANORDNUNG FÜR FLUGZEUGE
DISPOSITIF DE PERCHE DEPLOYABLE POUR AERONEF

(30) Priority: 30.11.1998 GB 9826165
(43) Date of publication of application: 26.09.2001
(73) Proprietor: BAE SYSTEMS plc, Farnborough, Hampshire GU14 6YU (GB)
(72) Inventor: CAMMISH, Geoffrey, Malcolm, British Aerospace PLC., Brough, EastYorkshire HU15 1EQ (GB); SIMPSON, Thomas, Mark, British Aerospace PLC, Brough, East Yorkshire HU15 1EQ (GB); WHITEHEAD, Christopher, Mark, Chellaston, Derby DE73 1WL (GB)
(74) Representative: Newell, William Joseph
(86) International application number: PCT/GB1999/003983
(87) International publication number: WO 2000/032470

(56) References cited:
- EP-A- 0 564 086
- GB-A- 690 186
- GB-A- 1 241 827

## Description

This invention relates to deployable probe arrangements for aircraft and in particular, but not exclusively, to an aircraft refuelling probe assembly and to aircraft incorporating such assemblies.

An aircraft refuelling probe is generally required to be moveable between a compact, stowed, state in which it does not contribute significantly to the drag of the aircraft, and an extended, deployed, condition in which it projects away from the aircraft, within the pilot's field of view so that he can manoeuvre it into a drogue towed by a tanker aircraft. The space on board the aircraft available for storage of the stowed probe is usually very limited. In addition, the probe must be capable of withstanding significant loads during the coupling and uncoupling process and these loads must be dissipated appropriately through the airframe structure. At the same time, however, it is important that the natural flexing and movement of the airframe structure in response to flight loads does not impose an undue load on the probe, either when stowed or extended.

EP 0564086 discloses a locking device for an aircraft deployable proble assembly, but it does not allow the aircraft structure to support the probe in as flexible and secure a manner as may be desirable.

Accordingly, in one aspect, this invention provides an aircraft deployable probe assembly which comprises:
an elongate telescopically extendable probe element;
an inner mounting means adapted for attachment in use to an aircraft structure to support an inboard proximal end region of said probe element, said inner mounting comprising a spherical joint arrangement allowing angular movement of said probe element about at least two generally orthogonal rotational axes; and
an outer mounting means spaced along said probe element from said inner mounting means and adapted for attachment in use to said aircraft structure to support a spaced region of said proximal end region of said probe element, said outer mounting means being adapted to allow one or more of linear movement of said probe element in a longitudinal direction and angular movement of the probe element with respect to said outer mounting means,
wherein said inner mounting means comprises an internal collar element supporting the inboard proximal end region of said probe element and is carried within an external collar element secured to said aircraft structure.

By this arrangement, the inner and outer mounting means provide an extent of compliancy which accommodates at least some of the relative linear and/or angular movement of the aircraft structure supporting said inner and outer mounting means.

Said spherical joint arrangement may comprise a gimbal arrangement or the like.

The arrangement of said outer mounting allows angular movement about the three rotational axes, as well as sliding movement in the longitudinal direction of said probe element.

To allow rigging and set up of the probe assembly, said inner mounting means preferably comprises rotational adjustment means for allowing angular adjustment of said probe element.

Whilst the above arrangement may be used for a variety of different probes that may be deployed from an aircraft, the arrangement has been designed with an aircraft refuelling probe in mind.

The invention also extends to an aircraft incorporating a refuelling probe as set out above.

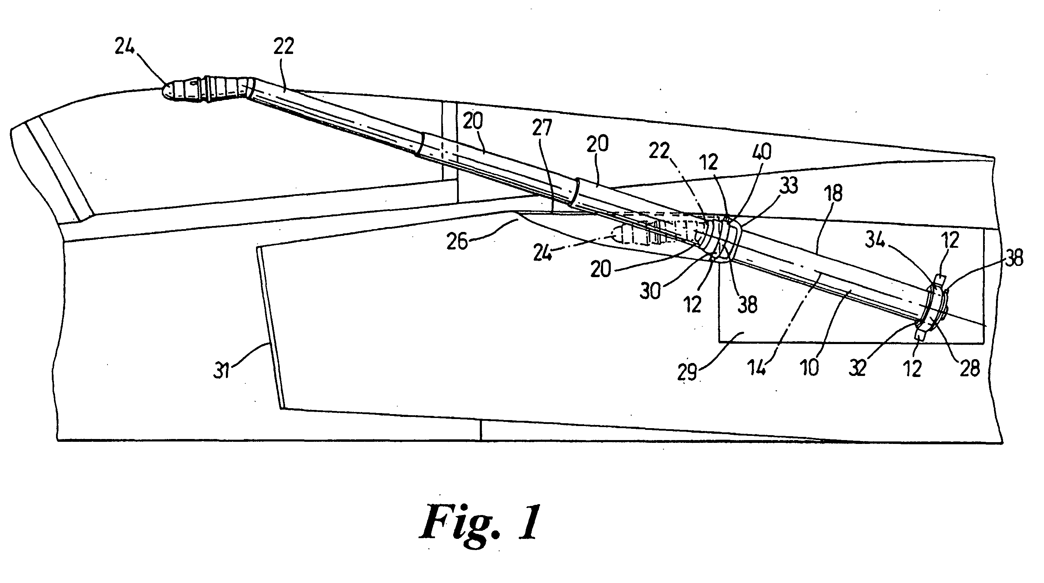

The invention may be performed in various ways and an embodiment thereof will now be described by way of example only, reference being made to the accompanying drawings, in which:-
Figure 1 is a schematic side view of a portion of the front fuselage of an aircraft incorporating a probe assembly in accordance with this invention, with the probe shown in both the extended and the retracted positions, and

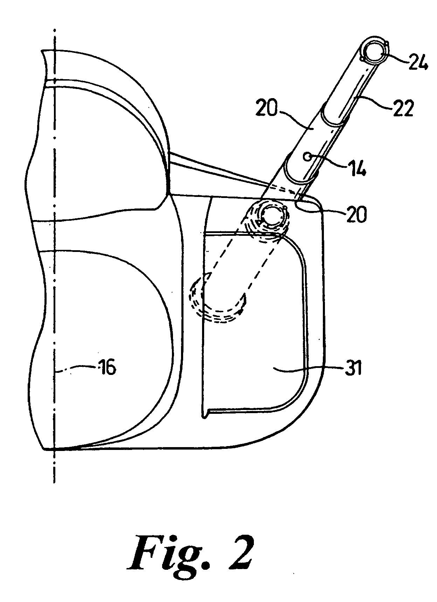

Figure 2 is a front view on the port side of the aircraft of Figure 1.

The probe assembly 10 is mounted between two adjacent frames 12 of the airframe structure. The longitudinal axis 14 of the probe assembly is disposed outboard of the aircraft central line 16 and inclined at an angle thereto. The probe assembly 10 comprises a proximal tube 18, two intermediate tubes 20 and a distal tube 22 carrying at its free end a refuelling nozzle 24. When stowed, the nozzle is disposed in a trough 26 which extends to the aircraft fuselage skin and is covered by a deployable door 27. The trough 26 may be used as a structural load carrying member, for example if load removal from the surrounding structure makes this desirable. The trough 26 provides an envelope for the nozzle to park when retracted and provides protection from the elements for both the nozzle and the bay beneath the trough.

The proximal tube 18 is located within a fuel cell 29 disposed in the side of the aircraft to the rear of an air inlet 31. The outer end of the proximal tube passes through a fuel seal 33. The proximal tube 18 of the probe assembly is secured to the adjacent structure 12 by means of an inner mounting assembly 28 and an outer mounting assembly 30 respectively. The inner mounting assembly 28 comprises an internal collar 32 which fits over the surface of the proximal tube 18. The outer surface of the internal collar 32 is spherical and received in a complementarily formed external collar 34 which is attached to the structure 12. The inner mounting assembly 28 allows rotation about two axes orthogonal to the longitudinal axis 14 of the probe. A torsion arm 38 provides rotational adjustment which facilitates rigging of the assembly to align the probe nozzle 24, and to allow for build tolerance.

The outer mounting assembly 30 comprises an internal collar 38 which is a sliding fit over the external surface of the proximal tube 18. One or both of the engaging faces may be provided with a low friction coating. The outer surface of the collar 38 is spherical and received in a complimentarily formed bearing member 40 which is attached to the forward frame 12. The outer mounting assembly 30 thus allows restrained fore and aft movement and relative pivotal movement.

Thus, the inner mounting assembly provides restraint in all three linear directions, whilst allowing rotation about axes other than the roll axis, and the outer mounting assembly provides restraint in the up/down and lateral linear directions, whilst allowing linear movement in the longitudinal direction and angular movement about all three axes.

The arrangement therefore provides secure restraint for the probe in both the stowed and deployed conditions but is compliant to allow movement to accommodate linear or angular relative movement of the structure.

The probe can be removed and re-installed easily for maintenance and/or for missions which do not require an inflight refuelling capability. In addition, if adequate provision has been provided in the airframe, the probe can be retro-fitted.

In view of their location, the linear and spherical bearing arrangements are selected to perform satisfactorily in fuel.

The whole assembly is.mass critical and the design is intended to provide good or optimal mass vs. load capability. In addition, the assembly allows the arrangement to be a line replaceable unit due to the ease of installation/removal.

The probe is extended and retracted by means of a rotary actuator and an internal operating mechanism (not shown).

The position of the rotary and axial load reaction can optionally be modified to suit load requirements; for example the loads may be reacted at the top or the bottom of the installation.

Furthermore, the arrangement presents the free end of the extended probe at a good position for coupling with a drogue, well away from other aircraft parts susceptible to damage by the drogue, and in good line of sight for the pilot of the aircraft.

## Claims

1. An aircraft deployable probe assembly (10) which comprises:
an elongate telescopically extendable probe element (18, 20, 22) ;
an inner mounting means (28) adapted for attachment in use to an aircraft structure to support an inboard proximal end region (18) of said probe element, said inner mounting means (28) comprising a spherical joint arrangement allowing angular movement of said probe element about at least two generally orthogonal rotational axes; and
an outer mounting means (30) spaced along said probe element from said inner mounting means (28) and adapted for attachment in use to said aircraft structure to support a spaced region of said proximal end region of said probe element, said outer mounting means (30) being adapted to allow one or more of linear movement of said probe element in a longitudinal direction and angular movement of the probe element with respect to said outer mounting means (30) ,
wherein said inner mounting means (28) comprises an internal collar element (32) supporting the inboard proximal end region of said probe element and is carried within an external collar element (34) secured to said aircraft structure (12).

2. An aircraft deployable probe assembly according to Claim 1, wherein said outer mounting means (30) allows local sliding longitudinal movement of said probe element (18, 20, 22) and local angular movement about three orthogonal axes.

3. An aircraft deployable probe assembly according to Claim 2, wherein said outer mounting means (30) comprises a collar element (38) slidably supporting said probe element for relative sliding movement, said collar element (38) being coupled to the remainder of said mounting means (30) by a spherical joint arrangement.

4. An aircraft deployable assembly according to any of the preceding claims, wherein at least one of said inner (28) and outer (30) mounting means comprises rotational adjustment means for allowing angular adjustment of said probe element (18, 20, 22).

5. An aircraft deployable probe assembly according to any of the preceding Claims wherein said probe element (18, 20, 22) is an aircraft refuelling probe.

6. An aircraft incorporating an aircraft deployable probe assembly (10) according to any of claims 1 to 5.

## Patentansprüche

1. Entfaltbare Sondenanordnung (10) für ein Flugzeug mit den folgenden Teilen:
ein teleskopartig streckbares Sondenelement (18, 20, 22);
eine innere Lagereinrichtung (28), die im Gebrauch an einer Flugzeugzelle befestigbar ist, um einen proximalen Innenbordendbereich (18) des Sondenelementes abzustützen, wobei die innere Lagereinrichtung (28) eine sphärische Verbindungseinrichtung aufweist, die eine Winkelbewegung des Sondenelementes um wenigstens zwei allgemein senkrecht aufeinanderstehende Drehachsen zulässt; und
eine äußere Lagereinrichtung (30), die längs des Sondenelementes von der inneren Lagereinrichtung (28) distanziert und im Betrieb an der Flugzeugzelle befestigbar ist, um einen Abstandsbereich des proximalen Endbereichs des Sondenelementes abzustützen, wobei die äußere Lagereinrichtung (30) eine oder mehrere lineare Bewegungen des Sondenelementes in Längsrichtung und eine Winkelbewegung des Sondenelementes gegenüber der äußeren Lagereinrichtung (30) zulässt; und
wobei die innere Lagereinrichtung (28) ein inneres Bundelement (32) aufweist, das den proximalen Innenbordendbereich des Sondenelementes abstützt und innerhalb eines inneren Bundelementes (34) getragen wird, das an der Flugzeugzelle (12) festgelegt ist.

2. Entfaltbare Sondenanordnung für ein Flugzeug nach Anspruch 1, bei welcher die äußere Lagereinrichtung (30) eine örtliche Gleitbewegung des Sondenelementes (18, 20, 22) in Längsrichtung und eine örtliche Winkelbewegung um drei senkrecht aufeinanderstehende Achsen zulässt.

3. Entfaltbare Sondenanordnung nach Anspruch 2, bei welcher die äußere Lagereinrichtung (30) ein Bundelement (38) aufweist, das gleitbar das Sondenelement für eine relative Gleitbewegung abstützt, wobei das Bundelement (38) mit der restlichen Lagereinrichtung (30) durch eine sphärische Verbindungsanordnung gekuppelt ist.

4. Entfaltbare Sondenanordnung nach einem der vorhergehenden Ansprüche, bei welcher wenigstens eine der inneren (28) und äußeren (30) Lagereinrichtungen Dreheinstellmittel aufweist, um eine Winkeleinstellung des Sondenelementes (18, 20, 22) zu bewirken.

5. Entfaltbare Sondenanordnung nach einem der vorhergehenden Ansprüche, bei welcher das Sondenelement (18, 20, 22) eine Sonde zur Kraftstoffauffüllung eines Flugzeugs ist.

6. Flugzeug mit einer entfaltbaren Sondenanordnung (10) nach einem der Ansprüche 1 bis 5.

## Revendications

1. Assemblage de sonde rétractable pour aéronef (10), comprenant :
un élément de sonde allongé pouvant s'étendre de manière télescopique (18, 20, 22) ;
un moyen de montage interne (28) adapté pour s'attacher en cours d'utilisation à une structure d'aéronef afin de supporter une zone d'extrémité proximale (18) à l'intérieur dudit élément de sonde, ledit moyen de montage interne (28) comprenant un agencement à joint sphérique permettant un déplacement angulaire dudit élément de sonde autour d'au moins deux axes de rotation en général orthogonaux ; et
un moyen de montage externe (30) espacé le long dudit élément de sonde à partir dudit moyen de montage interne (28), et adapté pour s'attacher en cours d'utilisation à ladite structure d'aéronef afin de supporter une zone espacée de ladite zone d'extrémité proximale dudit élément de sonde, ledit moyen de montage externe (30) étant adapté pour permettre un ou plusieurs déplacements linéaires dudit élément de sonde dans une direction longitudinale et un déplacement angulaire de l'élément de sonde par rapport au dit moyen de montage externe (30),
dans lequel ledit moyen de montage interne (28) comprend un élément à collier interne (32) supportant la zone d'extrémité proximale à l'intérieur dudit élément de sonde, et est tenu dans un élément à collier externe (34) fixé à ladite structure d'aéronef (12).

2. Assemblage de sonde rétractable pour aéronef selon la revendication 1, dans lequel ledit moyen de montage externe (30) permet un déplacement longitudinal par coulissement local dudit élément de sonde (18, 20, 22), et un déplacement angulaire local autour des trois axes orthogonaux.

3. Assemblage de sonde rétractable pour aéronef selon la revendication 2, dans lequel ledit moyen de montage externe (30) comprend un élément à collier (38) supportant de manière coulissante ledit élément de sonde afin de permettre un déplacement relatif par coulissement, ledit élément de collier (38) étant couplé au reste dudit moyen de montage (30) à l'aide d'un agencement à joint sphérique.

4. Assemblage de sonde rétractable pour aéronef selon l'une quelconque des revendications précédentes, dans lequel au moins l'un desdits moyens de montage interne (28) et externe (30) comprend un moyen d'ajustement par rotation destiné à permettre un ajustement angulaire dudit élément de sonde (18, 20, 22).

5. Assemblage de sonde rétractable pour aéronef selon l'une quelconque des revendications précédentes, dans lequel ledit élément de sonde (18, 20, 22) est une sonde de ravitaillement pour aéronef.

6. Aéronef incorporant un assemblage de sonde rétractable pour aéronef (10) selon l'une quelconque des revendications 1 à 5.
